# EUROPEAN PATENT APPLICATION

(11) **EP 2 918 557 A1**
(43) Date of publication of application: **16.09.2015**
(21) Application number: 13853565.3
(22) Date of filing: 15.10.2013
(51) Int. Cl.: C03B 23/03, G09F 9/00

(54) **METHOD FOR MANUFACTURING COVER GLASS FOR DISPLAY AND DEVICE FOR MANUFACTURING COVER GLASS FOR DISPLAY**

(30) Priority: 07.11.2012 JP 2012245753; 20.12.2012 JP 2012277819; 11.10.2013 JP 2013213450
(71) Applicant: Nippon Electric Glass Co., Ltd., Otsu-shi, Shiga 520-8639 (JP)
(72) Inventor: WADA, Masanori, Otsu-shi Shiga 520-8639 (JP); ODANI, Osamu, Otsu-shi Shiga 520-8639 (JP); IKEMOTO, Masayuki, Otsu-shi Shiga 520-8639 (JP)
(74) Representative: Tetzner, Michael
(86) International application number: PCT/JP2013/077981
(87) International publication number: WO 2014/073336

(57) **Abstract**

Provided is a display cover glass having less surface defects. A forming step is performed with a cushioning member (30) elastically deformable in a thickness direction disposed between a first forming die (26) and a flat glass sheet (50).

## Description

### [Technical Field]

This invention relates to a method for manufacturing a display cover glass and an apparatus for manufacturing a display cover glass.

### [Background Art]

Mobile devices with a display, including cellular phones, smartphones, notebook personal computers, and tablet personal computers, have recently been widely used (hereinafter, a mobile device with a display is referred to as a "mobile display").

Patent Literature 1 describes a cover glass that can be used for a mobile display. The cover glass described in Patent Literature 1 includes: a front portion located in front of an image display region; and bent portions located at both sides of the image display region in a width direction thereof and bending away from the front portion.

Patent Literature 1 describes a method for manufacturing a cover glass with bent portions by heating a flat glass sheet placed on a die to soften it.

### [Citation List]

### [Patent Literature]

[PTL 1]
JP-A-2012-101975

### [Summary of Invention]

### [Technical Problem]

If a cover glass is manufactured by the manufacturing method described in Patent Literature 1, defects, such as scratches and a transfer impression of the surface of the forming die, may be produced on the surface of the cover glass.

A principal object of the present invention is to provide a display cover glass having less surface defects.

### [Solution to Problem]

A first method for manufacturing a display cover glass according to the present invention relates to a method for manufacturing a display cover glass including a flattened portion and a bent portion continued to the flattened portion. In the first method for manufacturing a display cover glass according to the present invention, a flat glass sheet is placed on a first forming die including a flat first forming surface so that a middle portion of the flat glass sheet is located on top of the first forming surface and an end portion of the flat glass sheet is located outside the first forming surface. A forming step is performed of pressing the end portion of the flat glass sheet using a pressing tool with application of heat to at least the end portion of the flat glass sheet to deform the end portion of the flat glass sheet, thus forming a bent portion to obtain the cover glass. The forming step is performed with a cushioning member elastically deformable in a thickness direction disposed between the first forming die and the flat glass sheet.

In the first method for manufacturing a display cover glass according to the present invention, the end portion of the flat glass sheet is preferably pressed using the pressing tool with a cushioning member elastically deformable in a thickness direction disposed on a portion of the pressing tool to be in contact with the flat glass sheet.

A second method for manufacturing a display cover glass according to the present invention relates to a method for manufacturing a display cover glass including a flattened portion and a bent portion continued to the flattened portion. In the second method for manufacturing a display cover glass according to the present invention, a flat glass sheet is placed on a first forming die including a flat first forming surface so that a middle portion of the flat glass sheet is located on top of the first forming surface and an end portion of the flat glass sheet is located outside the first forming surface. A forming step is performed of pressing the end portion of the flat glass sheet using a pressing tool with application of heat to at least the end portion of the flat glass sheet to deform the end portion of the flat glass sheet, thus forming a bent portion to obtain the cover glass. The end portion of the flat glass sheet is pressed using the pressing tool with a cushioning member elastically deformable in a thickness direction disposed on a portion of the pressing tool to be in contact with the flat glass sheet.

In each of the first and second methods for manufacturing a display cover glass according to the present invention, the cushioning member is preferably formed of at least one of woven fabric and non-woven fabric.

In each of the first and second methods for manufacturing a display cover glass according to the present invention, the flat glass sheet is preferably pressed using the pressing tool with cooling of the pressing tool.

A third method for manufacturing a display cover glass according to the present invention relates to a method for manufacturing a display cover glass including a flattened portion and a bent portion continued to the flattened portion. In the third method for manufacturing a display cover glass according to the present invention, a flat glass sheet is placed on a first forming die including a flat first forming surface so that a middle portion of the flat glass sheet is located on top of the first forming surface and an end portion of the flat glass sheet is located outside the first forming surface. A forming step is performed of pressing the end portion of the flat glass sheet using a pressing tool with application of heat to at least the end portion of the flat glass sheet to deform the end portion of the flat glass sheet, thus forming a bent portion to obtain the cover glass. The flat glass sheet is pressed using the pressing tool with cooling of the pressing tool.

In each of the first to third methods for manufacturing a display cover glass according to the present invention, the pressing tool is preferably made of metal.

In each of the first to third methods for manufacturing a display cover glass according to the present invention, preferably, in the forming step, the end portion of the flat glass sheet is deformed by pressing the end portion of the flat glass sheet multiple times using the pressing tool. In this case, preferably, the first forming die further includes a second forming surface continued to the first forming surface and curved to conform to an inside surface of the bent portion and the pressing is performed so that with each pressing using the pressing tool, a portion of the end portion of the flat glass sheet in contact with the second forming surface increases in area. The forming step preferably includes a plurality of pressing steps different from each other in direction of pressing of the end portion of the flat glass sheet with the pressing tool. The forming step preferably includes the plurality of pressing steps to be performed one followed by the other, the other pressing step of pressing the end portion of the flat glass sheet with the pressing tool so that an angle formed by the direction of pressing of the end portion of the flat glass sheet with the pressing tool and a normal of the first forming surface is greater than that in the one pressing step. At least at the first time of pressing with the pressing tool in the forming step, a tip end of the end portion of the flat glass sheet is preferably pressed by the pressing tool.

In each of the first to third methods for manufacturing a display cover glass according to the present invention, the forming step is preferably performed in a state where a portion of the flat glass sheet corresponding to the bent portion of the cover glass is at a viscosity enabling plastic deformation and elastic deformation to occur therein when the end portion of the flat glass sheet is deformed.

In each of the first to third methods for manufacturing a display cover glass according to the present invention, it is preferred that in the forming step a temperature of the first forming die be set so that a portion of the flat glass sheet in direct or indirect contact with the first forming die is made plastically non-deformable whereas a portion of the flat glass sheet out of contact with the first forming die is made plastically and elastically deformable.

A fourth method for manufacturing a display cover glass according to the present invention relates to a method for manufacturing a display cover glass including a flattened portion and a bent portion continued to the flattened portion. In the fourth method for manufacturing a display cover glass according to the present invention, a flat glass sheet is placed on a first forming die including a flat first forming surface so that a middle portion of the flat glass sheet is located on top of the first forming surface and an end portion of the flat glass sheet is located outside the first forming surface. A forming step is performed of pressing the end portion of the flat glass sheet using a pressing tool with application of heat to at least the end portion of the flat glass sheet to deform the end portion of the flat glass sheet, thus forming a bent portion to obtain the cover glass. In the forming step, a temperature of the first forming die is set so that a portion of the flat glass sheet in contact with the first forming die is made plastically non-deformable whereas a portion of the flat glass sheet out of contact with the first forming die is made plastically and elastically deformable.

In each of the first to fourth methods for manufacturing a display cover glass according to the present invention, it is preferred that in the forming step the temperature of the first forming die be set so that the portion of the flat glass sheet in contact with the first forming die has a lower temperature than a softening point of the flat glass sheet.

In each of the first to fourth methods for manufacturing a display cover glass according to the present invention, the flat glass sheet used is preferably a flat glass sheet having a coefficient of linear thermal expansion of 105×10⁻⁷/°C or less at 30°C to 380°C.

In each of the first to fourth methods for manufacturing a display cover glass according to the present invention, the forming step is preferably performed with a second forming die disposed above the first forming die and the middle portion of the flat glass sheet clamped between the first and second forming dies and the second forming die is preferably disposed so that an end portion of the first forming die extends beyond the second forming die in plan view. In this case, preferably, the first forming die further includes a second forming surface continued to the first forming surface and curved to conform to an inside surface of the bent portion and the second forming die is provided to avoid being disposed directly above the second forming surface.

A first apparatus for manufacturing a display cover glass according to the present invention relates to an apparatus for manufacturing a display cover glass including a flattened portion and a bent portion continued to the flattened portion. The first apparatus for manufacturing a display cover glass according to the present invention includes a first forming die, a heating mechanism, a pressing tool, and a cushioning member. The first forming die includes a flat first forming surface. The first forming die is configured so that a flat glass sheet is placed thereon with a middle portion of the flat glass sheet located on top of the first forming surface and an end portion of the flat glass sheet located outside the first forming surface. The heating mechanism is configured to heat at least the end portion of the flat glass sheet. The pressing tool is configured to press the end portion of the flat glass sheet to deform the end portion of the flat glass sheet, thus forming a bent portion. The cushioning member is disposed on at least the first forming surface of the first forming die. The cushioning member is elastically deformable in a thickness direction.

The first apparatuses for manufacturing a display cover glass according to the present invention preferably further includes a cushioning member disposed on a portion of the pressing tool to be in contact with the flat glass sheet, the cushioning member being elastically deformable in a thickness direction.

A second apparatus for manufacturing a display cover glass according to the present invention relates to an apparatus for manufacturing a display cover glass including a flattened portion and a bent portion continued to the flattened portion. The second apparatus for manufacturing a display cover glass according to the present invention includes a first forming die, a heating mechanism, a pressing tool, and a cushioning member. The first forming die includes a flat first forming surface. The first forming die is configured so that a flat glass sheet is placed thereon with a middle portion of the flat glass sheet located on top of the first forming surface and an end portion of the flat glass sheet located outside the first forming surface. The heating mechanism is configured to heat at least the end portion of the flat glass sheet. The pressing tool is configured to press the end portion of the flat glass sheet to deform the end portion of the flat glass sheet, thus forming a bent portion. The cushioning member is disposed on a portion of the pressing tool to be in contact with the flat glass sheet. The cushioning member is elastically deformable in a thickness direction.

In each of the first and second apparatuses for manufacturing a display cover glass according to the present invention, the cushioning member is preferably formed of at least one of woven fabric and non-woven fabric.

In each of the first and second apparatuses for manufacturing a display cover glass according to the present invention, the pressing tool preferably includes a through hole to which a coolant is supplied.

A third apparatus for manufacturing a display cover glass according to the present invention relates to an apparatus for manufacturing a display cover glass including a flattened portion and a bent portion continued to the flattened portion. The third apparatus for manufacturing a display cover glass according to the present invention includes a first forming die, a heating mechanism, and a pressing tool. The first forming die includes a flat first forming surface. The first forming die is configured so that a flat glass sheet is placed thereon with a middle portion of the flat glass sheet located on top of the first forming surface and an end portion of the flat glass sheet located outside the first forming surface. The heating mechanism is configured to heat at least the end portion of the flat glass sheet. The pressing tool is configured to press the end portion of the flat glass sheet to deform the end portion of the flat glass sheet, thus forming a bent portion. The pressing tool includes a through hole to which a coolant is supplied.

In each of the first to third apparatuses for manufacturing a display cover glass according to the present invention, the pressing tool is preferably made of metal.

In the first to third apparatuses for manufacturing a display cover glass according to the present invention, preferably, the apparatus further includes a drive mechanism configured to drive the pressing tool and the drive mechanism allows the pressing tool to press the end portion of the flat glass sheet multiple times. In this case, preferably, the first forming die further includes a second forming surface continued to the first forming surface and curved to conform to an inside surface of the bent portion and the drive mechanism is configured to drive the pressing tool so that with each pressing using the pressing tool, a portion of the end portion of the flat glass sheet in contact with the second forming surface increases in area. The drive mechanism is preferably configured to drive the pressing tool so that a plurality of pressing steps different from each other in direction of pressing of the end portion of the flat glass sheet with the pressing tool are performed. The drive mechanism is preferably configured to drive the pressing tool to provide the plurality of pressing steps one followed by the other, the other pressing step of pressing the end portion of the flat glass sheet with the pressing tool so that an angle formed by the direction of pressing of the end portion of the flat glass sheet with the pressing tool and a normal of the first forming surface is greater than that in the one pressing step. The drive mechanism is preferably configured to drive the pressing tool so that at the first time of pressing with the pressing tool, the pressing tool presses a tip end of the end portion of the flat glass sheet.

In each of the first to third apparatuses for manufacturing a display cover glass according to the present invention, the drive mechanism preferably allows, when a portion of the flat glass sheet corresponding to the bent portion of the cover glass has a viscosity enabling plastic deformation and elastic deformation to occur therein, the pressing tool to press the end portion of the flat glass sheet.

In each of the first to third apparatuses for manufacturing a display cover glass according to the present invention, the first forming die preferably includes a through hole to which a coolant is supplied.

A fourth apparatus for manufacturing a display cover glass according to the present invention relates to an apparatus for manufacturing a display cover glass including a flattened portion and a bent portion continued to the flattened portion. The fourth apparatus for manufacturing a display cover glass according to the present invention includes a first forming die, a heating mechanism, and a pressing tool. The first forming die includes a flat first forming surface. The first forming die is configured so that a flat glass sheet is placed thereon with a middle portion of the flat glass sheet located on top of the first forming surface and an end portion of the flat glass sheet located outside the first forming surface. The heating mechanism is configured to heat at least the end portion of the flat glass sheet. The pressing tool is configured to press the end portion of the flat glass sheet to deform the end portion of the flat glass sheet, thus forming a bent portion. The first forming die includes a through hole to which a coolant is supplied.

In each of the first to fourth apparatuses for manufacturing a display cover glass according to the present invention, the apparatus preferably further includes a second forming die disposed above the first forming die and configured to clamp the middle portion of the flat glass sheet together with the first forming die and an end portion of the first forming die preferably extends beyond the second forming die in plan view. In this case, preferably, the first forming die further includes a second forming surface continued to the first forming surface and curved to conform to an inside surface of the bent portion and the second forming die is provided to avoid being located directly above the second forming surface.

### [Advantageous Effects of Invention]

The present invention can provide a display cover glass having less surface defects.

### [Brief Description of Drawings]

[Fig. 1]

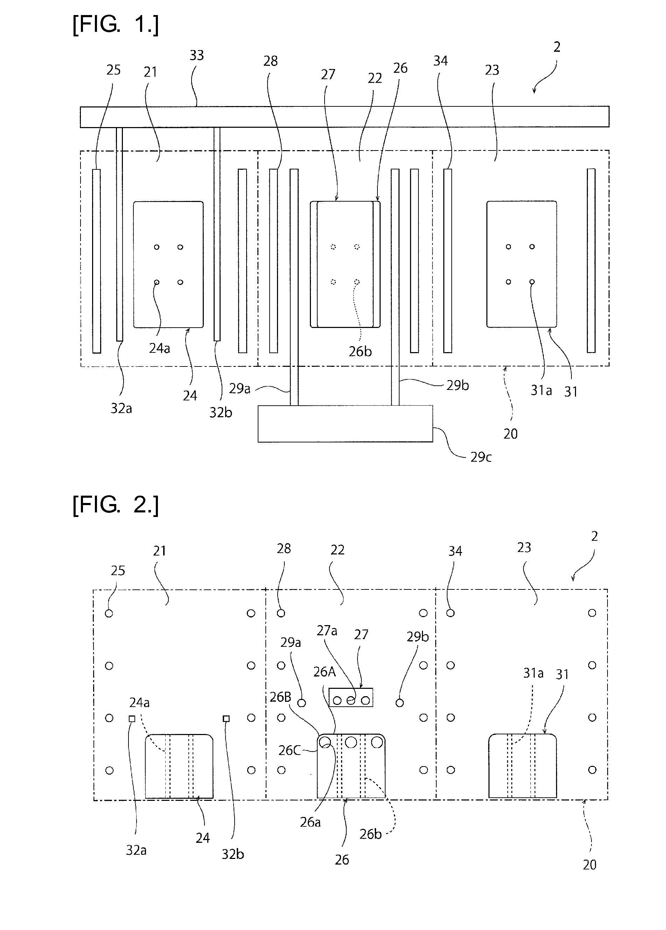

   Fig. 1 is a schematic plan view of an apparatus for manufacturing a display cover glass in one embodiment of the present invention.
[Fig. 2]
   Fig. 2 is a schematic side view of the apparatus for manufacturing a display cover glass in the one embodiment of the present invention.
[Fig. 3]

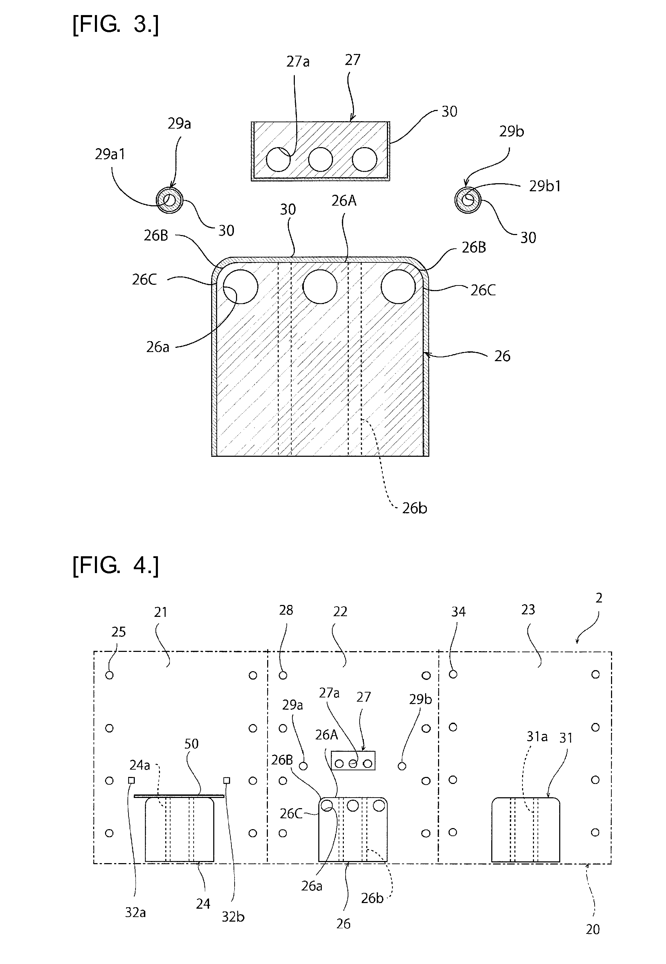

   Fig. 3 is a schematic cross-sectional view of a forming device of the apparatus for manufacturing a display cover glass in the one embodiment of the present invention.
[Fig. 4]
   Fig. 4 is a schematic side view for illustrating a step for manufacturing a display cover glass in the one embodiment of the present invention.
[Fig. 5]

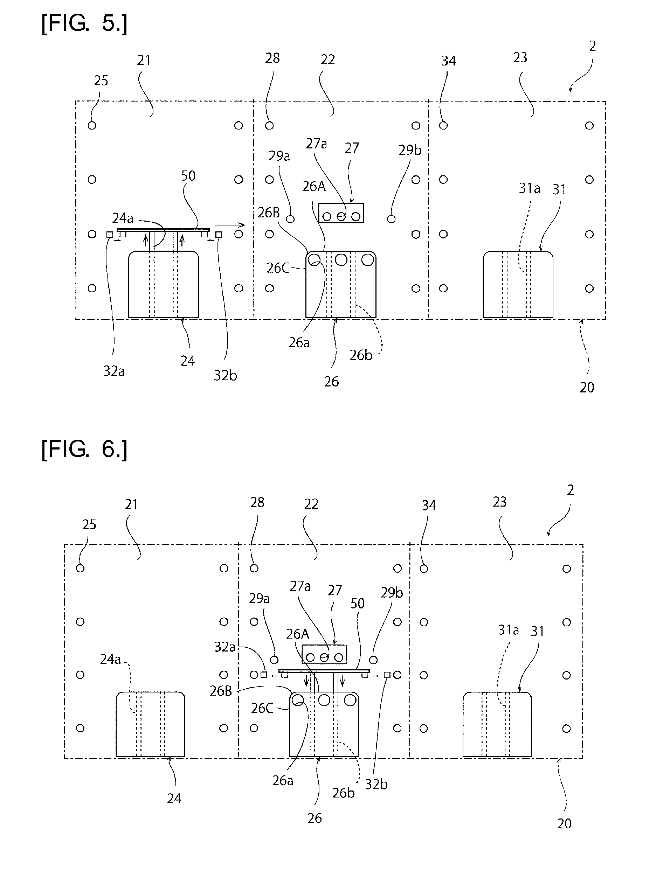

   Fig. 5 is a schematic side view for illustrating another step for manufacturing a display cover glass in the one embodiment of the present invention.
[Fig. 6]
   Fig. 6 is a schematic side view for illustrating still another step for manufacturing a display cover glass in the one embodiment of the present invention.
[Fig. 7]

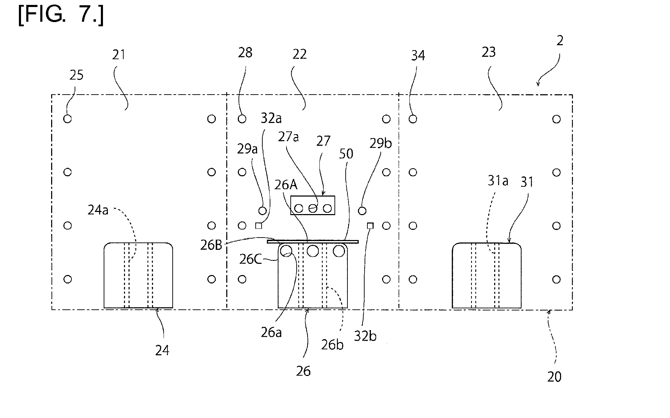

   Fig. 7 is a schematic side view for illustrating still another step for manufacturing a display cover glass in the one embodiment of the present invention.
[Fig. 8]

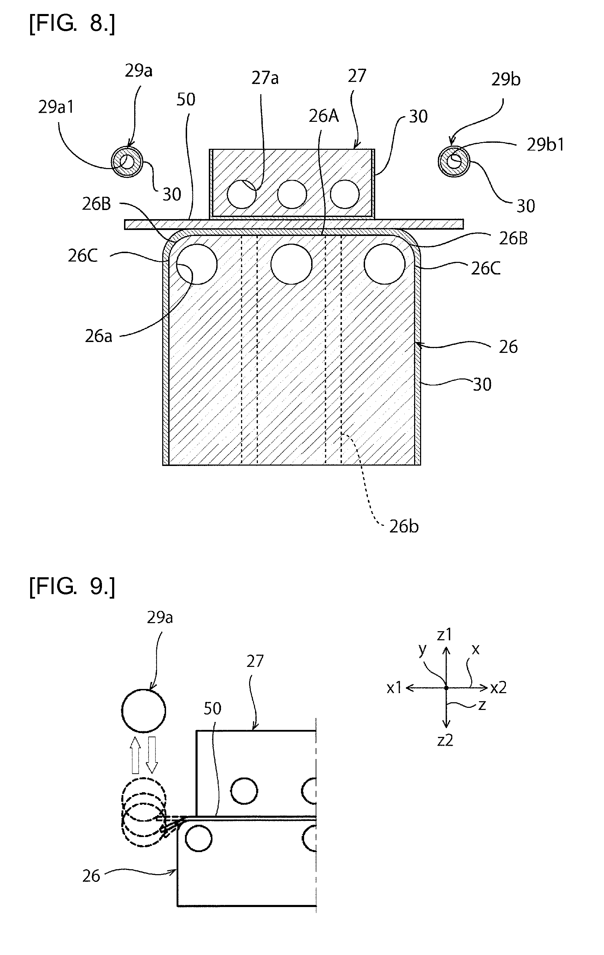

   Fig. 8 is a schematic cross-sectional view for illustrating still another step for manufacturing a display cover glass in the one embodiment of the present invention.
[Fig. 9]
   Fig. 9 is a schematic side view for illustrating a forming step in the one embodiment of the present invention.
[Fig. 10]

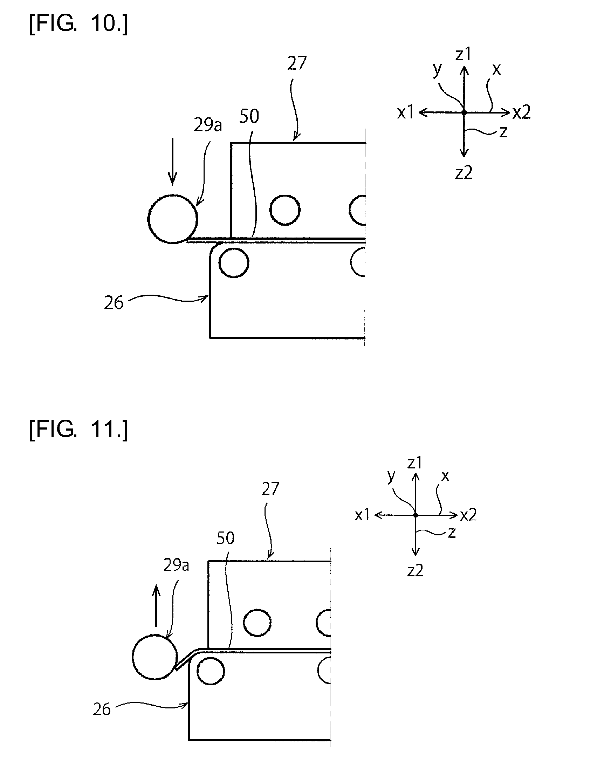

   Fig. 10 is a schematic side view for illustrating the forming step in the one embodiment of the present invention.
[Fig. 11]
   Fig. 11 is a schematic side view for illustrating the forming step in the one embodiment of the present invention.
[Fig. 12]

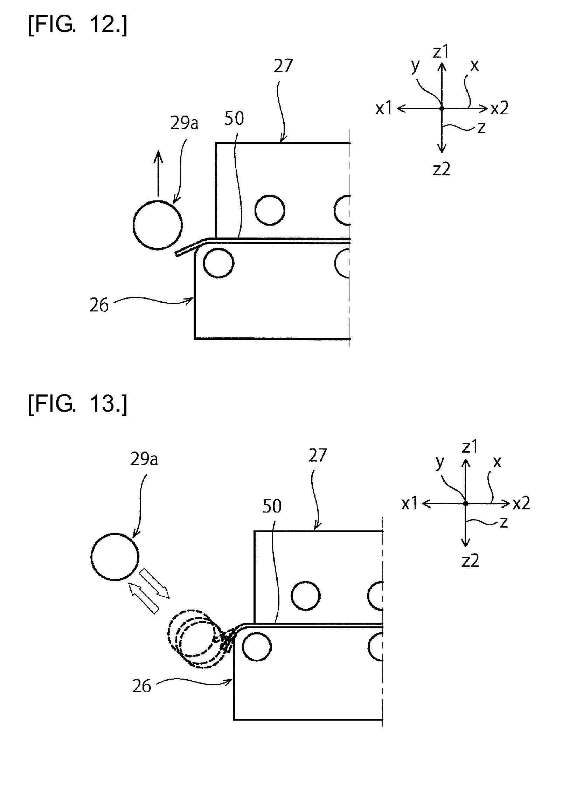

   Fig. 12 is a schematic side view for illustrating the forming step in the one embodiment of the present invention.
[Fig. 13]
   Fig. 13 is a schematic side view for illustrating the forming step in the one embodiment of the present invention.
[Fig. 14]

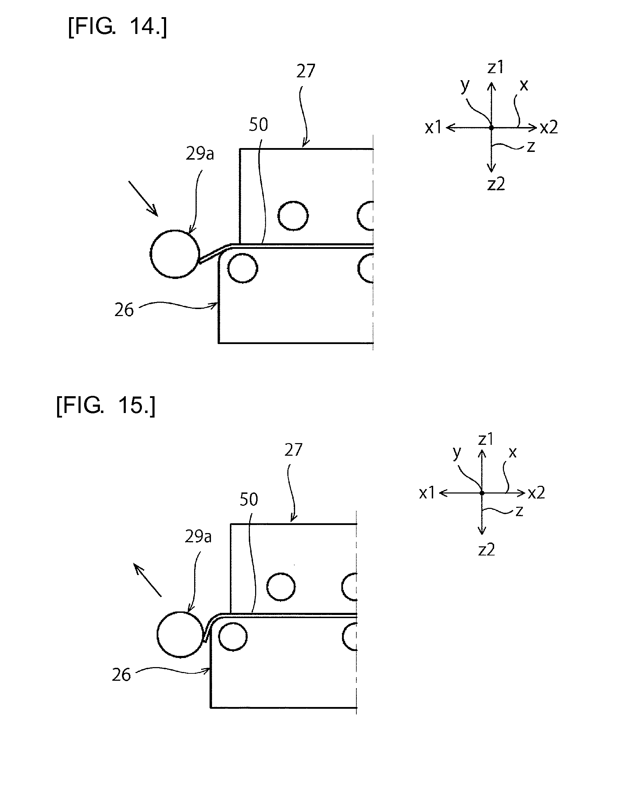

   Fig. 14 is a schematic side view for illustrating the forming step in the one embodiment of the present invention.
[Fig. 15]
   Fig. 15 is a schematic side view for illustrating the forming step in the one embodiment of the present invention.
[Fig. 16]

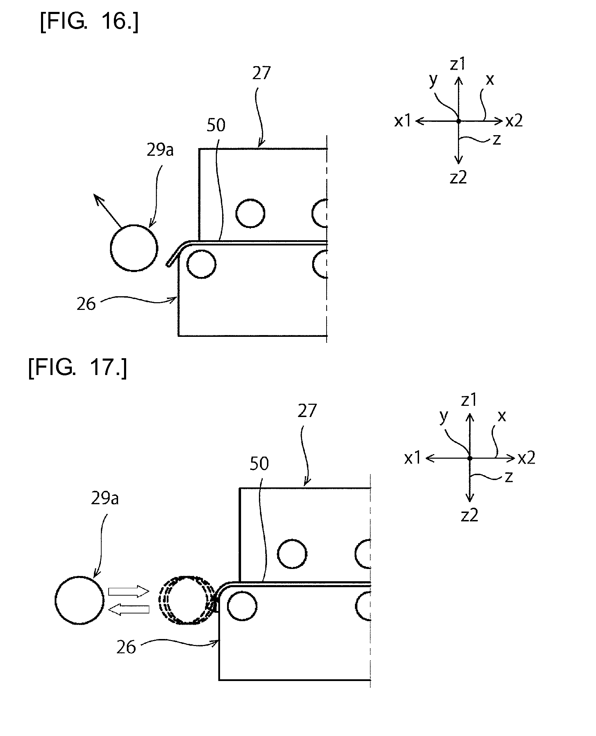

   Fig. 16 is a schematic side view for illustrating the forming step in the one embodiment of the present invention.
[Fig. 17]
   Fig. 17 is a schematic side view for illustrating the forming step in the one embodiment of the present invention.
[Fig. 18]

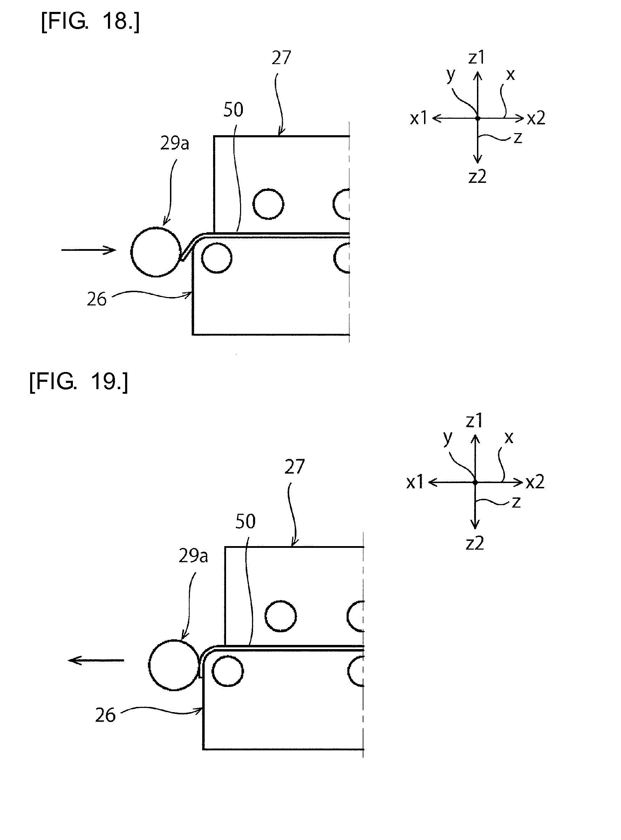

   Fig. 18 is a schematic side view for illustrating the forming step in the one embodiment of the present invention.
[Fig. 19]
   Fig. 19 is a schematic side view for illustrating the forming step in the one embodiment of the present invention.
[Fig. 20]

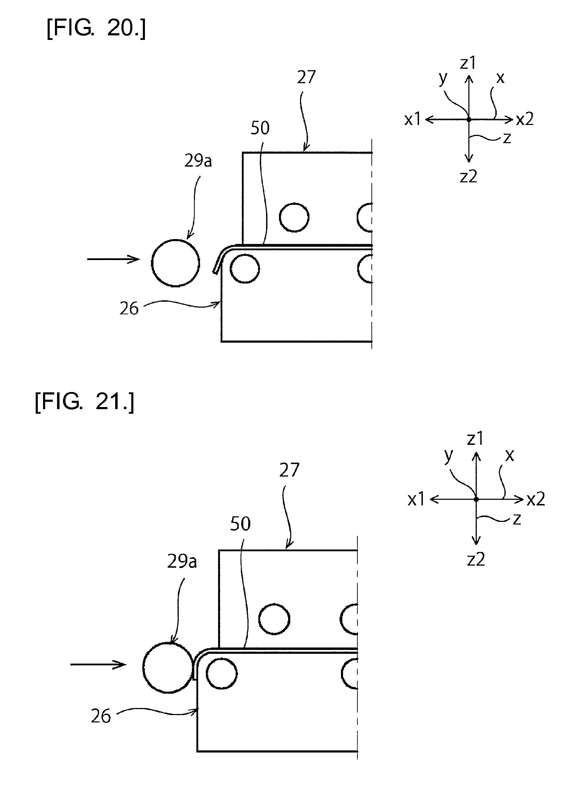

   Fig. 20 is a schematic side view for illustrating the forming step in the one embodiment of the present invention.
[Fig. 21]
   Fig. 21 is a schematic side view for illustrating the forming step in the one embodiment of the present invention.
[Fig. 22]

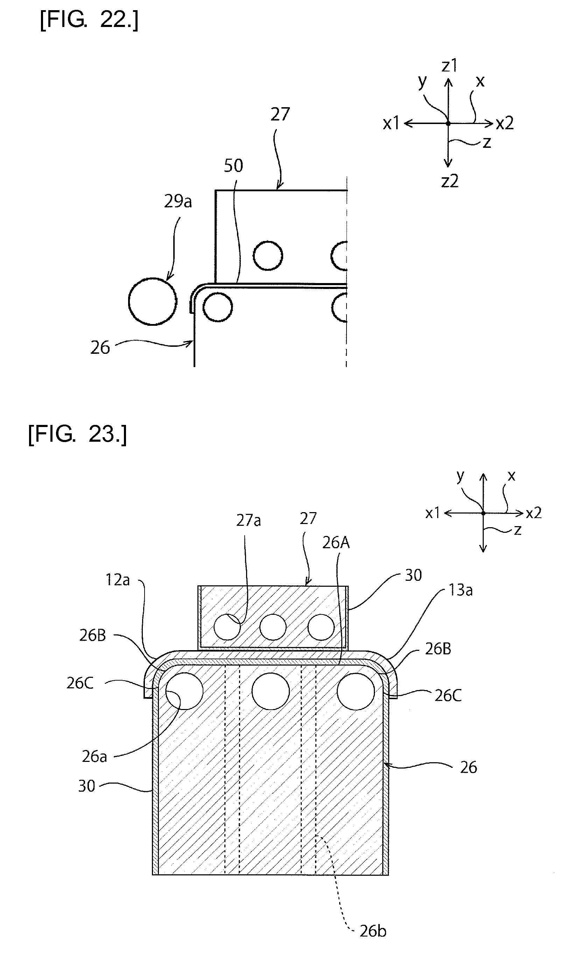

   Fig. 22 is a schematic side view for illustrating the forming step in the one embodiment of the present invention.
[Fig. 23]
   Fig. 23 is a schematic cross-sectional view for illustrating still another step for manufacturing a display cover glass in the one embodiment of the present invention.
[Fig. 24]

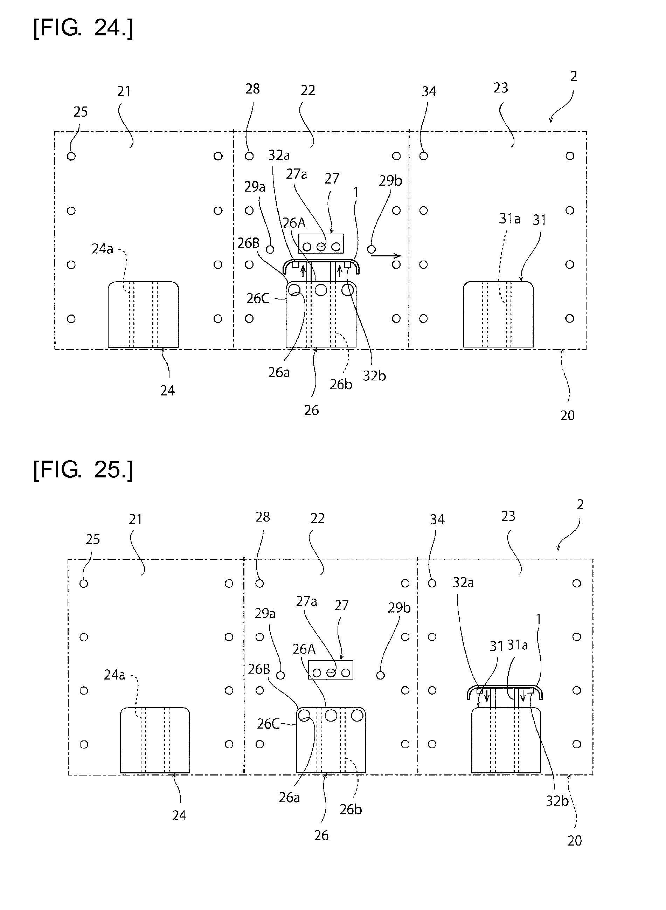

   Fig. 24 is a schematic side view for illustrating still another step for manufacturing a display cover glass in the one embodiment of the present invention.
[Fig. 25]
   Fig. 25 is a schematic side view for illustrating still another step for manufacturing a display cover glass in the one embodiment of the present invention.
[Fig. 26]

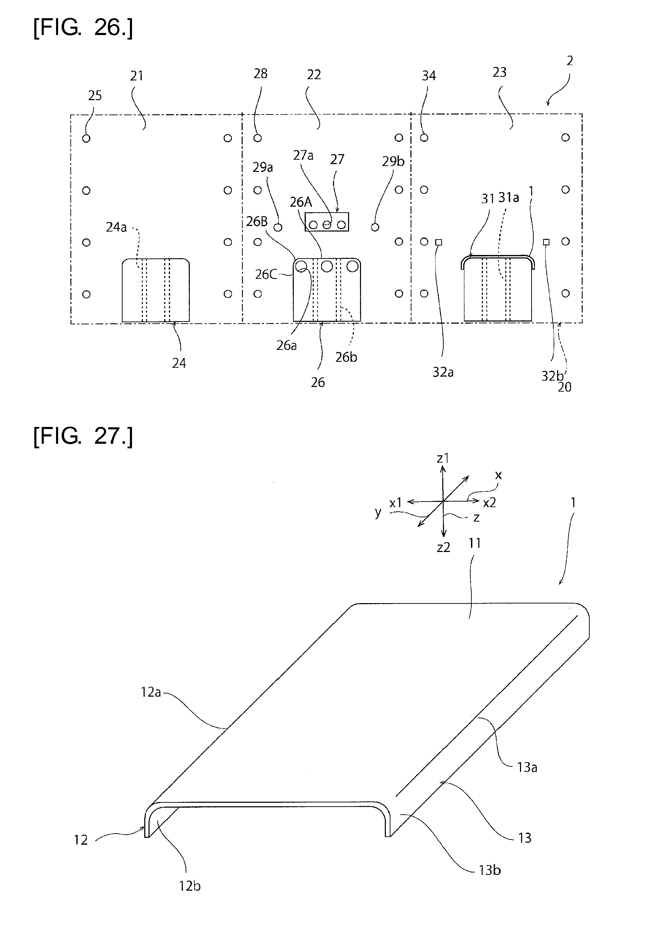

   Fig. 26 is a schematic side view for illustrating still another step for manufacturing a display cover glass in the one embodiment of the present invention.
[Fig. 27]
   Fig. 27 is a schematic perspective view of a display cover glass manufactured in the one embodiment of the present invention.
[Fig. 28]

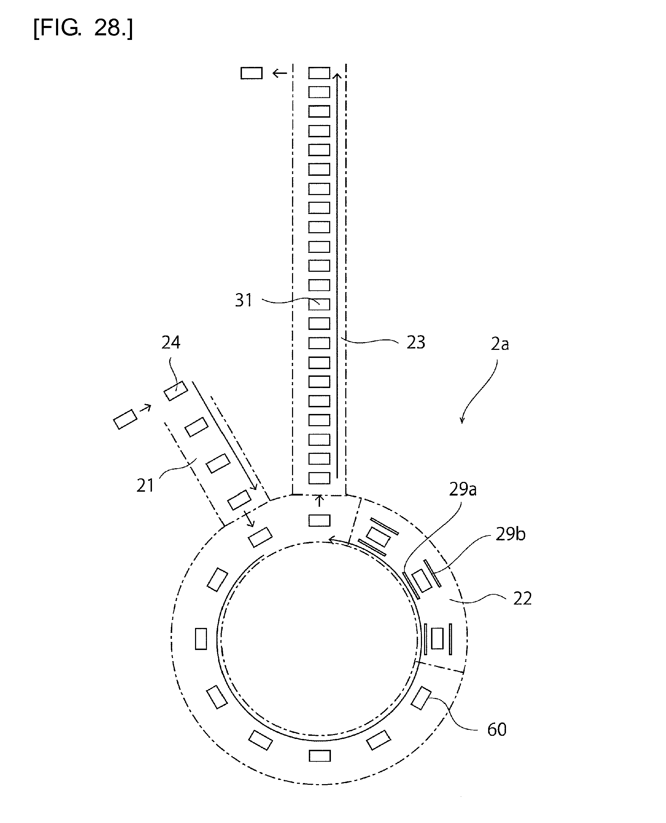

   Fig. 28 is a schematic plan view of an apparatus for manufacturing a display cover glass in a modification.

### [Description of Embodiments]

Hereinafter, a description will be given of an exemplary preferred embodiment for working of the present invention. However, the following embodiment is merely illustrative. The present invention is not at all limited to the following embodiment.

Throughout the drawings to which the embodiment and the like refer, elements having substantially the same functions will be referred to by the same reference signs. The drawings to which the embodiment and the like refer are schematically illustrated. The dimensional ratios and the like of objects illustrated in the drawings may be different from those of the actual objects. Different drawings may have different dimensional ratios and the like of the objects. Dimensional ratios and the like of specific objects should be determined in consideration of the following descriptions.

In this embodiment, a description will be given of an example where a display cover glass 1 shown in Fig. 27 is manufactured with reference to Figs. 1 to 26. Prior to the description of a method for manufacturing a display cover glass 1, a description will be given of the structure of a display cover glass 1 to be manufactured in this embodiment with reference to Fig. 27.

### (Display Cover Glass 1)

The display cover glass 1 shown in Fig. 27 is a cover glass for covering a display region and at least a portion of a side surface of a display. More specifically, the display cover glass 1 is a cover glass for covering a display region of a display and at least portions of both side surfaces thereof in the x-axis direction. No particular limitation is placed on the type of the display so long as it is a device with a display. The display may be, for example, a mobile device, such as a cellular phone, a smartphone, a notebook personal computer or a tablet personal computer. The display may be in a plate-like shape.

The display cover glass 1 is preferably made of, for example, a tempered glass such as a chemically tempered glass, a crystallized glass or the like.

The thickness of the display cover glass 1 is not particularly limited but is preferably 0.2 mm to 1.5 mm, more preferably 0.25 mm to 1.1 mm, and still more preferably 0.3 mm to 1.0 mm.

The display cover glass 1 includes a flattened portion 11. The flattened portion 11 is a portion to be disposed in front of the display region of the display. The term "in front of" herein refers to a direction (a z1 side) of extension of the normal of the display region and the side (a z2 side) opposite to the direction (the z1 side) of extension of the normal is referred to as backward.

The flattened portion 11 has a flat sheet-like shape. The flattened portion 11 has a rectangular shape. The dimension of the flattened portion 11 along the x-axis direction may be, for example, about 40 mm to about 200 mm. The dimension of the flattened portion 11 along the y-axis direction may be, for example, about 80 mm to about 300 mm. The term "flat sheet-like shape" includes a substantially flat sheet-like shape. For example, the term "flat sheet" includes a sheet having one surface and the other surface inclined at 5° or less to the one surface.

An x1-side end of the flattened portion 11 in the x-axis direction is connected to a first side portion 12. This first side portion 12 is a portion to be disposed lateral to the display. Specifically, the first side portion 12 is disposed on an x1 side of the display in the x-axis direction.

The first side portion 12 includes a first bent portion 12a. The first bent portion 12a is continued to the flattened portion 11. The first bent portion 12a bends backward (toward the z2 side) from the x1-side end of the flattened portion 11 in the x-axis direction. A bending angle, which is the angle formed by the tangent line of the inside wall surface of the x1-side end of the flattened portion 11 and the tangent line of the inside wall surface of the distal end of the first side portion 12, is preferably 90° to 170° and more preferably 90° to 150°.

Particularly in this embodiment, the first side portion 12 includes the first bent portion 12a and a first flat portion 12b connected to an end of the first bent portion 12a. However, the present invention is not limited to this configuration. The first side portion 12 may be composed of the first bent portion 12a alone.

An x2-side end of the flattened portion 11 in the x-axis direction is connected to a second side portion 13. This second side portion 13, the flattened portion 11, and the first side portion 12 are formed of a single glass sheet. This second side portion 13 is a portion to be disposed lateral to the display. Specifically, the second side portion 13 is disposed on an x2 side of the display in the x-axis direction.

The second side portion 13 includes a second bent portion 13a. The second bent portion 13a is continued to the flattened portion 11. The second bent portion 13a bends backward (toward the z2 side) from the x2-side end of the flattened portion 11 in the x-axis direction. The bending angle between the flattened portion 11 and the second side portion 13 is preferably 90° to 170° and more preferably 90° to 150°.

Particularly in this embodiment, the second side portion 13 includes the second bent portion 13a and a second flat portion 13b connected to an end of the second bent portion 13a. However, the present invention is not limited to this configuration. The second side portion 13 may be composed of the second bent portion 13a alone.

At least one of a pair of side surfaces of the display may form a display region where an image can be displayed. In other words, each of the side portions 12, 13 may be located over the side surface forming a display region.

### (Manufacturing Apparatus 2 for Display Cover Glass 1)

Next, a description will be given of the structure of a manufacturing apparatus 2 for the display cover glass 1 with reference to Figs. 1 to 3.

As shown in Figs. 1 and 2, the manufacturing apparatus 2 includes an apparatus body 20. The apparatus body 20 includes a preheating chamber 21, a forming chamber 22, and a slow cooling chamber 23. The preheating chamber 21, the forming chamber 22, and the slow cooling chamber 23 are disposed in this order along one direction. The preheating chamber 21, the forming chamber 22, and the slow cooling chamber 23 are each surrounded by an unshown heat insulating material.

The preheating chamber 21 is a chamber for use in preheating a flat glass sheet 50 to be described hereinafter. Arranged in the preheating chamber 21 are: a preheating table 24 on which the flat glass sheet 50 is to be placed; and a heater 25 capable of controlling the atmospheric temperature inside the preheating chamber 21. The preheating table 24 is provided with a plunger 24a. This plunger 24a enables upward movement of the flat glass sheet 50 placed on the preheating table 24.

The forming chamber 22 is a chamber for use in heating the flat glass sheet 50 to a temperature suitable for forming and forming the flat glass sheet 50 into a display cover glass 1. Arranged in the forming chamber 22 are: a first forming die 26 on which the flat glass sheet 50 is to be placed; a second forming die 27 configured to clamp the flat glass sheet 50 together with the first forming die 26; a heater (heating mechanism) 28 capable controlling the atmospheric temperature inside the forming chamber 22; and pressing tools 29a, 29b configured to press x-axis end portions of the flat glass sheet 50. Each of the lengths of the first and second forming dies 26, 27 in the depth direction (the lengths thereof in the vertical direction of the plane of Fig. 1) is greater than the length of the flat glass sheet 50 in the depth direction.

As shown in Fig. 2, the first forming die 26 includes: a flat first forming surface 26A for use in forming a flattened portion 11; curved second forming surfaces 26B for use in forming bent portions 12a, 13a; and flat third forming surfaces 26C for use in forming flat portions 12b, 13b. The second forming surfaces 26B have respective curved shapes conforming to the shapes of the bent portions 12a, 13a.

The first forming die 26 is made of a hard material, such as ceramic or metal. The second forming die 27 is also made of a hard material, such as ceramic or metal. The first and second forming dies 26, 27 may be made of a heat insulating material consisting of a porous body or so on. As shown in Fig. 3, a cushioning member 30 is disposed on at least the first forming surface 26A of the first forming die 26. In this embodiment, the cushioning member 30 is provided not only on the first forming surface 26A but also on the second and third forming surfaces 26B, 26C. The cushioning member 30 covers the first to third forming surfaces 26A to 26C. Likewise, a cushioning member 30 is disposed on a surface of the second forming die 27 to be in contact with the flat glass sheet 50.

The cushioning member 30 is a member elastically deformable in the thickness direction. The cushioning member 30 is preferably formed of at least one of woven fabric and non-woven fabric made of, for example, alumina fibers, glass fibers or carbon fibers. The cushioning member 30 preferably has a thickness of, for example, about 0.1 mm to about 2 mm. Illustration of the cushioning member 30 is omitted in Figs. 1 and 2 and similar figures,.

The first forming die 26 includes through holes 26a formed therein to which a coolant, such as air, is supplied. The supply of the coolant to these through holes 26a causes the first forming die 26 to be cooled. The through holes 26a are preferably provided near the corners defining the second forming surfaces 26B of the first forming die 26. Likewise, the second forming die 27 includes through holes 27a formed therein to which a coolant, such as air, is supplied. The supply of the coolant to these through holes 27a causes the second forming die 27 to be cooled.

Like the preheating table 24, the first forming die 26 is provided with a plunger 26b configured to lift the flat glass sheet 50 or the display cover glass 1 located on top of the first forming die 26.

The length of the second forming die 27 in the width direction is smaller than the length of the first forming die 26 in the width direction. Therefore, as shown in Fig. 1, both widthwise end portions of the first forming die 26 extend beyond the second forming die 27 in plan view.

The pressing tools 29a, 29b are members for use in pressing widthwise end portions of the flat glass sheet 50. The pressing tools 29a, 29b can be driven by a pressing tool drive mechanism 29c shown in Fig. 1.

As shown in FIG. 3, the pressing tools 29a, 29b include respective through holes 29a1, 29b1 formed therein to which a coolant, such as air, is supplied. The supply of the coolant to these through holes 29a1, 29b1 causes the pressing tools 29a, 29b to be cooled.

The pressing tools 29a, 29b may be made of, for example, ceramic or glass but, in this embodiment, is made of metal which is an elastic material. A cushioning member 30 is provided on a portion of each pressing tool 29a, 29b to be in contact with the flat glass sheet 50. Specifically, in this embodiment, the pressing tools 29a, 29b are covered with respective cushioning members 30.

As shown in Figs. 1 and 2, arranged in the slow cooling chamber 23 are a slow cooling table 31 and a heater 34 capable of controlling the atmospheric temperature inside the slow cooling chamber 23. The display cover glass 1 formed in the forming chamber 22 is placed on the slow cooling table 31 and slowly cooled in the slow cooling chamber 23. The slow cooling table 31 is also provided with a plunger 31a.

The manufacturing apparatus 2 is provided with transfer devices 32a, 32b configured to be driven by a transfer device drive mechanism 33. These transfer devices 32a, 32b enable the transfer of the flat glass sheet 50 or the display cover glass 1 among the preheating chamber 21, the forming chamber 22, and the slow cooling chamber 23.

### (Method for Manufacturing Display Cover Glass 1)

Next, a detailed description will be given of a method for manufacturing a display cover glass 1 with reference to Figs. 1 to 26.

First, a flat glass sheet 50 (see Fig. 4) is prepared. The flat glass sheet 50 is a glass sheet for use to constitute a display cover glass 1. The thickness of the flat glass sheet 50 is substantially equal to that of the display cover glass 1.

Next, as shown in Fig. 4, the flat glass sheet 50 is placed on top of the preheating table 24 in the preheating chamber 21. The placed flat glass sheet 50 is heated by the heater 25. In this preheating chamber 21, the flat glass sheet 50 is heated to the degree that when the flat glass sheet 50 is conveyed to the interior of the forming chamber 22 reaching a higher temperature, it is prevented from being damaged. The heating temperature of the flat glass sheet 50 in the preheating chamber 21 is appropriately set depending upon the composition of the flat glass sheet 50, the temperature in the forming chamber 22, and so on. The heating temperature of the flat glass sheet 50 in the preheating chamber 21 can be set at a temperature around the strain point to the annealing point of the glass, for example, at about 200°C to 700°C.

Next, the flat glass sheet 50 preheated in the preheating chamber 21 is conveyed to the forming chamber 22. Specifically, first, as shown in Fig. 5, the plunger 24a is projected from the preheating table 24 to move the flat glass sheet 50 above the preheating table 24. Next, the transfer devices 32a, 32b are moved under the flat glass sheet 50 and the plunger 24a is then moved down to allow the transfer devices 32a, 32b to support the flat glass sheet 50 thereon. Next, as shown in Fig. 6, the transfer device drive mechanism 33 (see Fig. 1) drives the transfer devices 32a, 32b to transfer the preheated flat glass sheet 50 from the preheating chamber 21 to above the first forming die 26 in the forming chamber 22. Next, the plunger 26b is moved up, the transfer devices 32a, 32b are then moved horizontally and in a direction away from each other from under the flat glass sheet 50, and the plunger 26b is then moved down. Thus, as shown in Fig. 7, the preheated flat glass sheet 50 is placed on top of the first forming surface 26A of the first forming die 26 in the forming chamber 22. Specifically, the flat glass sheet 50 is placed so that a widthwise middle portion of the flat glass sheet 50 is located on top of the first forming surface 26A and both widthwise end portions of the flat glass sheet 50 are located outside the first forming surface 26A. In a later forming step, side portions 12, 13 are constituted by both the widthwise end portions of the flat glass sheet 50 located outside the first forming surface 26A and a flattened portion 11 is constituted by the middle portion of the flat glass sheet 50 located on top of the first forming surface 26A.

Note that it is preferred that after the flat glass sheet 50 is placed on top of the first forming die 26, an unshown centering mechanism be driven to align the widthwise midpoint of the flat glass sheet 50 with the widthwise midpoint of the first forming die 26.

Next, as shown in Fig. 8, the second forming die 27 is moved down toward the first forming die 26, so that the widthwise middle portion of the flat glass sheet 50 is clamped between the first forming die 26 and the second forming die 27. In this state, at least the widthwise end portions of the flat glass sheet 50 are heated by the heater 28 forming the heating mechanism.

During the time, the coolant is supplied to the through holes 26a and 27a provided in the first and second forming dies 26 and 27, respectively, to prevent the first and second forming dies 26 and 27 from increasing in temperature. Thus, the flat glass sheet 50 has the lowest temperature at the portion of the flat glass sheet 50 clamped between the first and second forming dies 26, 27, the highest temperature at the portions of the flat glass sheet 50 out of contact with both the first and second forming dies 26, 27, and an intermediate temperature at the portions of the flat glass sheet 50 in contact only with the first forming die 26.

The heating in the forming chamber 22 is performed until the widthwise end portions of the flat glass sheet 50 reach a viscosity enabling both of plastic deformation and elastic deformation to occur therein. Normally, when the flat glass sheet 50 has a viscosity of less than 10⁸ dPa·s, the flat glass sheet 50 does not elastically deform but plastically deforms. On the other hand, when the flat glass sheet 50 has a viscosity of more than 10¹¹ dPa·s, the flat glass sheet 50 does not plastically deform but elastically deforms. When the flat glass sheet 50 has a viscosity of about 10⁸ dPa·s to about 10¹¹ dPa·s, the flat glass sheet 50 plastically and elastically deforms. Therefore, the heating in the forming chamber 22 is preferably performed so that the flat glass sheet 50 has a viscosity of about 10^{8.5} dPa·s to about 10^{10.5} dPa·s and more preferably performed so that the flat glass sheet 50 has a viscosity of about 10⁹ dPa·s to about 10¹⁰ dPa·s. The temperature at which the flat glass sheet 50 has a viscosity of about 10⁸ dPa·s to about 10¹¹ dPa·s varies depending upon the composition of the flat glass sheet 50.

Furthermore, in heating the flat glass sheet 50, it is preferred to supply the coolant to the through holes 26a, 27a to cool the first and second forming dies 26, 27 so that the portion of the flat glass sheet 50 in contact with the first forming die 26 has a viscosity range making it plastically non-deformable. In other words, the temperature of the first forming die 26 is preferably set so that the portion of the flat glass sheet 50 in contact with the first forming die 26 is made plastically non-deformable whereas the portion thereof out of contact with the first forming die 26 is made plastically and elastically deformable. In the forming step, the portion of the flat glass sheet 50 in contact with the first forming die 26 preferably has a temperature lower than the softening point of the flat glass sheet 50, more preferably a temperature not higher than the glass transition point of the flat glass sheet 50 plus 100°C, still more preferably a temperature not higher than the glass transition point, yet still more preferably a temperature 10°C or more lower than the glass transition point, and most preferably a temperature of the strain point of the flat glass sheet 50 to the glass transition point minus 30°C. When the portion of the flat glass sheet 50 in contact with the first forming die 26 has a temperature lower than the softening point thereof, the deformation of the portion in contact with the first forming die 26 can be reduced, resulting in a display cover glass 1 having a highly smooth flattened portion 11. In the forming step, on the other hand, the portion of the flat glass sheet 50 out of contact with the first forming die 26 preferably has a temperature of the glass transition point of the flat glass sheet 50 to not higher than the glass softening point, more preferably a temperature of the glass transition point to the glass softening point minus 40°C, and still more preferably a temperature of the glass transition point to the glass softening point minus 130°C.

When in the above manner a temperature difference is created between the portion of the flat glass sheet 50 in contact with the first forming die 26 and the portion thereof out of contact with the first forming die 26, the portions of the flat glass sheet 50 in and out of contact with the first forming die 26 have different amounts of thermal expansion. Specifically, the relatively high-temperature portion of the flat glass sheet 50 out of contact with the first forming die 26 has a greater amount of thermal expansion than the relatively low-temperature portion of the flat glass sheet 50 in contact with the first forming die 26. Owing to this difference in amount of thermal expansion, the flat glass sheet 50 may cause distortion, such as warpage or waviness. Therefore, from the viewpoint of reducing the distortion of the flat glass sheet 50 in the forming step to obtain a display cover glass 1 having high shape accuracy, the flat glass sheet 50 preferably has a small coefficient of thermal expansion. Specifically, the coefficient of linear thermal expansion of the flat glass sheet 50 at 30°C to 380°C is preferably 105×10⁻⁷/°C or less, more preferably 100×10⁻⁷/°C or less, still more preferably 90×10⁻⁷/°C or less, even more preferably 85×10⁻⁷/°C, and particularly preferably 80×10⁻⁷/°C.

Next, as shown in Figs. 9 to 22, using the pressing tools 29a and 29b, the end portions of the flat glass sheet 50 are pressed toward the first forming die 26 and thereby deformed. Thus, as shown in Fig. 23, bent portions 12a, 13a are formed to obtain a display cover glass 1 shown in Figs. 23 and 27 (the forming step). This forming step is performed with cooling of the pressing tools 29a, 29b by supplying the coolant to the through holes 29a1, 29b1 in the pressing tool 29a, 29b.

Thereafter, as shown in Fig. 24, the display cover glass 1 lifted by the plunger 26b is supported on the transfer devices 32a, 32b. Next, as shown in Fig. 25, the transfer devices 32a, 32b are driven by the transfer device drive mechanism 33, so that the display cover glass 1 is moved from the forming chamber 22 to above the slow cooling table 31 in the slow cooling chamber 23. Thereafter, with the display cover glass 1 supported by the plunger 31a, the transfer devices 32a, 32b are moved horizontally away from each other from below the display cover glass 1. Next, the plunger 31a is moved down, so that as shown in Fig. 26 the display cover glass 1 is placed on top of the slow cooling table 31. The display cover glass 1 is slowly cooled on top of the slow cooling table 31 and then taken out of the slow cooling chamber 23. Through the above steps, the display cover glass 1 can be completed. The take-out of the display cover glass 1 from the slow cooling chamber 23 is normally carried out after the temperature of the display cover glass 1 reaches a glass strain point or less, for example, 300°C or less.

Next, a description will be given of the details of the forming step in this embodiment.

In this embodiment, in the forming step, the end portions of the flat glass sheet 50 are gradually deformed by pressing them multiple times using the pressing tools 29a, 29b, thus forming bent portions 12a, 13a. In other words, the pressing tools 29a, 29b are driven by the pressing tool drive mechanism 29c to press the end portions of the flat glass sheet 50 multiple times.

Specifically, first, as shown in Figs. 9 to 12, the pressing tools 29a, 29b are moved downward (toward the z2 side) along the x-axis direction which is the vertical direction, to perform a pressing process for pressing the end portions of the flat glass sheet 50 toward the z2 side at least once and preferably several times. During the forming step, the portions of the flat glass sheet 50 corresponding to the bent portions 12a, 13a of the display cover glass 1 are heated to have a viscosity enabling both of plastic deformation and elastic deformation to occur therein. Therefore, when the pressing tools 29a, 29b are moved upward after, as shown in Figs. 10 and 11, pressing the end portions of the flat glass sheet 50 to plastically deform the portions of the flat glass sheet 50 corresponding to the bent portions 12a, 13a of the display cover glass 1, the end portions of the flat glass sheet 50 elastically deform in the direction of approach to the original shape by their own elasticity as shown in Fig. 12.

Next, as shown in Figs. 13 to 16, the pressing tools 29a, 29b press the end portions of the flat glass sheet 50 at least once and preferably several times in the direction of pressing toward the z2 side and the middle of the flat glass sheet 50.

Next, as shown in Figs. 17 to 22, the pressing tools 29a, 29b press the end portions of the flat glass sheet 50 at least once and preferably several times in the direction of pressing along the x-axis direction which is the horizontal direction.

In the above manner, in this embodiment, a plurality of pressing steps are performed which are different from each other in direction of pressing of the end portions of the flat glass sheet 50 with the pressing tools 29a, 29b. The plurality of pressing steps include those to be performed one followed by the other, the other pressing step of pressing the end portions of the flat glass sheet 50 with the pressing tools 29a, 29b so that the angle formed by the direction of pressing of each end portion of the flat glass sheet 50 with the relevant pressing tool 29a, 29b and the first forming surface 26A is greater than that in the one pressing step. Specifically, the plurality of pressing steps are performed by changing the direction of pressing so that the direction of pressing of each end portion of the flat glass sheet 50 with the relevant pressing tool 29a, 29b gradually approaches from the vertical (z-axis) to horizontal (x-axis) direction. For example, the direction of pressing of each end portion of the flat glass sheet 50 with the relevant pressing tool 29a, 29b is changed so that the angle formed by the direction of pressing and the first forming surface 26A is 90° in the first pressing step and 180° in the last pressing step. The plurality of pressing steps are performed so that with each pressing using the pressing tools 29a and 29b, the portions of the end portions of the flat glass sheet 50 in contact with the second forming surfaces 26B increase in area.

At least at the first time of pressing with the pressing tools 29a, 29b (in the first pressing step) in the forming step, the tip ends of the end portions of the flat glass sheet 50 are pressed by the pressing tools 29a, 29b. In all the pressing steps, the tip ends of the end portions of the flat glass sheet 50 can be pressed by the pressing tools 29a, 29b. In this embodiment, however, at the times of pressing with the pressing tools 29a, 29b along the x-axis direction shown in Figs. 18 to 22, the pressing tools 29a, 29b are engaged against the middles of the end portions of the flat glass sheet 50.

As described previously, in this embodiment, the forming step is performed with the cushioning member 30 elastically deformable in the thickness direction disposed between the first forming die 26 and the flat glass sheet 50. Therefore, the hard first forming die 26 and the flat glass sheet 50 are free from direct contact. Hence, it can be prevented that in the forming step and so on, scratches and like damages are formed on the surface of the display cover glass 1 owing to the contact of the first forming die 26 with the flat glass sheet 50. As a result, a display cover glass 1 having less surface defects can be obtained.

In this embodiment, the cushioning member 30 is also disposed between the second forming die 27 and the flat glass sheet 50. Thus, it can be prevented that scratches and like damages are formed on the surface of the display cover glass 1 owing to the contact of the second forming die 27 with the flat glass sheet 50. Furthermore, the cushioning members 30 are also disposed on the portions of the pressing tools 29a, 29b to be in contact with the flat glass sheet 50. Thus, it can be prevented that scratches and like damages are formed on the surface of the display cover glass 1 owing to the contact of the pressing tools 29a, 29b with the flat glass sheet 50. Therefore, a display cover glass 1 having still less surface defects can be obtained.

When the cushioning member 30 is formed of woven fabric or non-woven fabric, the surface roughness of the surface of the cushioning member 30 close to the flat glass sheet 50 is greater than that of the surfaces of the forming dies 26, 27. In this embodiment, however, the through holes 26a, 27a, 29a1, 29b1 to which the coolant is supplied are formed in the forming dies 26, 27 and/or the pressing tools 29a, 29b and, in the forming step, the forming dies 26, 27 and/or the pressing tools 29a, 29b are cooled. Therefore, the surface shapes of the forming dies 26, 27 and/or the pressing tools 29a, 29b are less likely to be transferred.

From the viewpoint of reducing the temperature rise of the portion of the flat glass sheet 50 clamped between the first forming die 26 and the second forming die 27, the forming dies 26, 27 are each preferably made of a heat insulating material. Specifically, the forming dies 26, 27 are preferably made of, for example, a ceramic material containing as a major ingredient alumina, silicon carbide or diatomite.

The term "heat insulating material" used in the present invention refers to a material having a lower thermal conductivity than the flat glass sheet 50, specifically, a material having a thermal conductivity of 5 W/(m·K) or less.

In the forming step, the portion of the flat glass sheet 50 in direct or indirect contact with the first forming die 26 is at a viscosity making it plastically non-deformable. Therefore, the surface shape of the first forming die 26 is less likely to be transferred to the portion of the flat glass sheet 50 in direct or indirect contact with the first forming die 26. Likewise, the portion of the flat glass sheet 50 in direct or indirect contact with the second forming die 27 is at a viscosity making it plastically non-deformable. Therefore, the surface shape of the second forming die 27 is less likely to be transferred to the portion of the flat glass sheet 50 in direct or indirect contact with the second forming die 27. Hence, a display cover glass 1 having still less surface defects can be obtained.

The forming step is performed in a state where the portions of the flat glass sheet 50 corresponding to the bent portions 12a, 13a of the display cover glass 1 are at a high viscosity enabling plastic deformation and elastic deformation to occur therein. Thus, in the forming step, the end portions of the flat glass sheet 50 also have a high viscosity. Therefore, the surface shapes of the pressing tools 29a, 29b are less likely to be transferred to the end portions of the flat glass sheet 50. From the viewpoint of making the surface shapes of the pressing tools 29a, 29b still less likely to be transferred, the forming step is preferably performed in a state where the end portions of the flat glass sheet 50 are at a viscosity of 10¹⁰ dPa·s or more.

In addition, since the forming step is performed in a state where the portions of the flat glass sheet 50 corresponding to the bent portions 12a, 13a of the display cover glass 1 are at a viscosity enabling plastic deformation and elastic deformation to occur therein, the first bent portion 12a, the first flat portion 12b, and the flattened portion 11 can have substantially equal thicknesses. The second bent portion 13a, the second flat portion 13b, and the flattened portion 11 can have substantially equal thicknesses.

In this embodiment, in the forming step, the end portions of the flat glass sheet 50 are pressed multiple times using the pressing tools 29a, 29b. In other words, the flat glass sheet 50 is gradually deformed in multiple times. Therefore, the time for contact of the pressing tools 29a, 29b with the flat glass sheet 50 can be reduced. Hence, the surface shapes of the pressing tools 29a, 29b are still less likely to be transferred to the end portions of the flat glass sheet 50.

Furthermore, since the pressing tools 29a, 29b are made of metal exhibiting elastic deformation, excessive stress is less likely to be applied between the pressing tools 29a, 29b and the flat glass sheet 50 in the forming step. Therefore, the surface shapes of the pressing tools 29a, 29b are still less likely to be transferred to the end portions of the flat glass sheet 50.

In this embodiment, pressing is performed so that with each pressing using the pressing tools 29a and 29b, the portions of the end portions of the flat glass sheet 50 in contact with the second forming surfaces 26B increase in area. The portions of the end portions of the flat glass sheet 50 in contact with the second forming surfaces 26B are cooled by the first forming die 26 to the temperature providing a viscosity making the end portions plastically non-deformable. When, as in this embodiment, pressing is performed so that with each pressing using the pressing tools 29a and 29b, the portions of the end portions of the flat glass sheet 50 in contact with the second forming surfaces 26B increase in area, the portions of the end portions of the flat glass sheet 50 being in a temperature range making them plastically and elastically deformable are gradually cooled after being deformed. Thus, it can be prevented that the portions of the flat glass sheet 50 being in a temperature range making them plastically and elastically deformable come into contact the first forming die 26 over a long period of time. Therefore, the surface shape of the first forming die 26 is still less likely to be transferred to the end portions of the flat glass sheet 50.

When the end portions of the flat glass sheet 50 come into contact with the cooled pressing tools 29a, 29b, the temperature of the end portions of the flat glass sheet 50 decreases. Therefore, the temperature of the end portions of the flat glass sheet 50 is highest immediately before the start of the forming step and decreases with each pressing step. In this embodiment, at least in the first pressing step in which the temperature of the end portions of the flat glass sheet 50 is highest, the tip ends of the end portions of the flat glass sheet 50 are pressed by the pressing tools 29a, 29b. Thus, in the first pressing step, the contact of the pressing tools 29a, 29b with the principal surfaces of the end portions of the flat glass sheet 50 is reduced. Therefore, the resultant display cover glass 1 is less likely to cause surface defects.

In this embodiment, the second forming die 27 has a smaller widthwise dimension than the first forming die 26 and is disposed so that both widthwise end portions of the first forming die 26 extend beyond the second forming die 27 when viewed in plan (when viewed in the z-axis direction). Therefore, it can be prevented that the end portions and near-end portions of the flat glass sheet 50 to be deformed have an undesirably high viscosity (undesirably low temperature). Thus, the portions of the flat glass sheet 50 corresponding to the bent portions 12a, 13a of the display cover glass 1 can have a viscosity enabling plastic deformation and elastic deformation to occur therein upon deformation of the end portions of the flat glass sheet 50. From the viewpoint of effectively deforming these portions within a viscosity range enabling plastic deformation and elastic deformation, the second forming die 27 is preferably provided to avoid being disposed directly above (on the z1 side of) the second forming surfaces 26B. In addition, avoiding the second forming die 27 being disposed directly above the second forming surfaces 26B is preferred because it can be prevented that the impression of the first forming die 26 is made on the surface of the flat glass sheet 50 having come into contact with the first forming die 26.

In this embodiment, a plurality of pressing steps are performed differently from each other in direction of pressing of the flat glass sheet 50 with the pressing tools 29a, 29b. Specifically, the next pressing step is performed so that the angle formed by the direction of pressing of each end portion of the flat glass sheet 50 with the relevant pressing tool 29a, 29b and the first forming surface 26A is greater than that in the previous pressing step. By doing so, the directions of pressing of the pressing tools 29a, 29b gradually approach parallel to the directions of the normals of the surfaces of the end portions of the flat glass sheet 50. Thus, during pressing with the pressing tools 29a, 29b, the pressing tools 29a, 29b can be prevented from sliding on the surfaces of the end portions of the flat glass sheet 50. Therefore, the formation of scratches can be more effectively prevented.

Since the forming is performed in a state where the end portions of the flat glass sheet 50 are in a viscosity range enabling plastic deformation and elastic deformation to occur therein when deformed, the end portions of the flat glass sheet 50 are less likely to undesirably deform. Thus, a display cover glass 1 having high shape accuracy can be obtained. Therefore, it is not necessarily needed to perform the step of polishing the surfaces of the formed flat glass sheet 50 other than the end surfaces after the forming step. Hence, a display cover glass 1 can be easily manufactured in a small number of steps for manufacturing it. In addition, a display cover glass 1 having less microcracks can be obtained.

From the viewpoint of increasing the shape accuracy of the flattened portion 11, the forming is preferably performed while cooling the middle portion of the flat glass sheet 50 with the first forming die 26 so that the portion of the flat glass sheet 50 in contact with the first forming die 26 has a viscosity making it plastically non-deformable. In this case, even if the cushioning member 30 elastically deformable in the thickness direction is provided, the surface shape of the cushioning member 30 is less likely to be transferred to the middle portion of the flat glass sheet 50 since the middle portion of the flat glass sheet 50 is not plastically deformable.

From the viewpoint of further increasing the shape accuracy of the display cover glass 1, it is preferred, without deforming the end portions of the flat glass sheet 50 at once, to gradually deform them by pressing them multiple times using the pressing tools 29a, 29b. During this process, the portions deformed in the previous pressing step come into contact with the first forming die 26 and are thus cooled to reach a viscosity making them plastically non-deformable. Thus, the portions deformed in the previous pressing step can be prevented from undesirably deforming in the subsequent pressing steps. Therefore, the shape accuracy can be further increased.

Furthermore, in this embodiment, the plurality of pressing steps include those to be performed one followed by the other, the other pressing step of pressing the end portions of the flat glass sheet 50 with the pressing tools 29a, 29b so that the angle formed by the direction of pressing of each end portion of the flat glass sheet 50 with the relevant pressing tool 29a, 29b and the first forming surface 26A is greater than that in the one pressing step. Specifically, the plurality of pressing steps are performed by changing the direction of pressing so that the direction of pressing of each end portion of the flat glass sheet 50 with the relevant pressing tool 29a, 29b gradually approaches from the vertical (z-axis) to horizontal (x-axis) direction. Thus, in each pressing step, the end portions of the flat glass sheet 50 can be pressed at a near right angle. Therefore, the pressing forces of the pressing tools 29a, 29b can be suitably applied to the flat glass sheet 50. Hence, higher shape accuracy can be achieved.

Moreover, in this embodiment, the forming step is performed with cooling of the pressing tools 29a, 29b. Thus, the portions of the flat glass sheet 50 in direct or indirect contact with the pressing tools 29a, 29b are decreased in temperature, increased in viscosity, and thus can be prevented from undesirably deforming. Therefore, still higher shape accuracy can be achieved.

In addition, since the second forming die 27 has a smaller widthwise dimension than the first forming die 26 and the widthwise end portions of the first forming die 26 extend beyond the second forming die 27 in plan view, the end portions of the flat glass sheet 50 are made more bendable in the forming step. Therefore, yet still higher shape accuracy can be achieved. From the viewpoint of achieving even still higher shape accuracy, it is preferred to avoid locating the second forming die 27 directly above the second forming surfaces 26B.

In this embodiment, the direction of extension of the pressing tools 29a, 29b is parallel to the edges of the flat glass sheet 50 extending in the depth direction. However, the present invention is not limited to this configuration. The direction of extension of the pressing tools 29a, 29b may not be parallel to the edges of the flat glass sheet 50 extending in the depth direction.

Fig. 28 is a schematic plan view of a manufacturing apparatus 2a according to a modification. As shown in Fig. 28, the manufacturing apparatus 2a includes, like the manufacturing apparatus 2, a preheating chamber 21, a forming chamber 22, and a slow cooling chamber 23. In the manufacturing apparatus 2a, flat glass sheets 50 (not shown in Fig. 28) placed on top of individual preheating tables 24 are preheated while being conveyed along the direction of extension of the preheating chamber 21. The forming chamber 22 is provided in a circle. The forming chamber 22 is internally provided with a plurality of forming die pairs 60 which are each composed of a first forming die 26 and a second forming die 27 and are arranged along the circumferential direction. The forming die pairs 60 circularly move along the circumferential direction (the direction of the arrow) in the interior of the forming chamber 22 provided in a circle. Then, when each forming die pair 60 with a flat glass sheet 50 placed therebetween reaches a particular region in the forming chamber 22, the flat glass sheet 50 is pressed by pressing tools 29a, 29b and thus formed into a display cover glass 1. The formed display cover glass 1 is transferred to a slow cooling table 31 in the slow cooling chamber 23, wherein strain is removed from the display cover glass 1.

### [Reference Signs List]

1...display cover glass
2, 2a...manufacturing apparatus
11...flattened portion
12...first side portion
12a...first bent portion
12b...first flat portion
13...second side portion
13a...second bent portion
13b...second flat portion
20...apparatus body
21...preheating chamber
22...forming chamber
23...slow cooling chamber
24...preheating table
24a...plunger
25, 28, 34...heater
26...first forming die
26A...first forming surface
26B...second forming surface
26C...third forming surface
26a, 27a, 29a1, 29b1...through hole
26b...plunger
27...second forming die
29a, 29b...pressing tool
29c...pressing tool drive mechanism
30...cushioning member
31...slow cooling table
31a...plunger
32a, 32b...transfer device
33...transfer device drive mechanism
50...flat glass sheet
60...forming die pair

## Claims

1. A method for manufacturing a display cover glass including a flattened portion and a bent portion continued to the flattened portion, the method comprising:
the step of placing a flat glass sheet on a first forming die including a flat first forming surface so that a middle portion of the flat glass sheet is located on top of the first forming surface and an end portion of the flat glass sheet is located outside the first forming surface; and
a forming step of pressing the end portion of the flat glass sheet using a pressing tool with application of heat to at least the end portion of the flat glass sheet to deform the end portion of the flat glass sheet, thus forming a bent portion to obtain the cover glass,
wherein the forming step is performed with a cushioning member elastically deformable in a thickness direction disposed between the first forming die and the flat glass sheet.

2. The method for manufacturing a display cover glass according to claim 1, wherein the end portion of the flat glass sheet is pressed using the pressing tool with a cushioning member elastically deformable in a thickness direction disposed on a portion of the pressing tool to be in contact with the flat glass sheet.

3. A method for manufacturing a display cover glass including a flattened portion and a bent portion continued to the flattened portion, the method comprising:
the step of placing a flat glass sheet on a first forming die including a flat first forming surface so that a middle portion of the flat glass sheet is located on top of the first forming surface and an end portion of the flat glass sheet is located outside the first forming surface; and
a forming step of pressing the end portion of the flat glass sheet using a pressing tool with application of heat to at least the end portion of the flat glass sheet to deform the end portion of the flat glass sheet, thus forming a bent portion to obtain the cover glass,
wherein the end portion of the flat glass sheet is pressed using the pressing tool with a cushioning member elastically deformable in a thickness direction disposed on a portion of the pressing tool to be in contact with the flat glass sheet.

4. The method for manufacturing a display cover glass according to any one of claims 1 to 3, wherein the cushioning member is formed of at least one of woven fabric and non-woven fabric.

5. The method for manufacturing a display cover glass according to any one of claims 1 to 4, wherein the flat glass sheet is pressed using the pressing tool with cooling of the pressing tool.

6. A method for manufacturing a display cover glass including a flattened portion and a bent portion continued to the flattened portion, the method comprising:
the step of placing a flat glass sheet on a first forming die including a flat first forming surface so that a middle portion of the flat glass sheet is located on top of the first forming surface and an end portion of the flat glass sheet is located outside the first forming surface; and
a forming step of pressing the end portion of the flat glass sheet using a pressing tool with application of heat to at least the end portion of the flat glass sheet to deform the end portion of the flat glass sheet, thus forming a bent portion to obtain the cover glass,
wherein the flat glass sheet is pressed using the pressing tool with cooling of the pressing tool.

7. The method for manufacturing a display cover glass according to any one of claims 1 to 6, wherein the pressing tool is made of metal.

8. The method for manufacturing a display cover glass according to any one of claims 1 to 7, wherein in the forming step the end portion of the flat glass sheet is deformed by pressing the end portion of the flat glass sheet multiple times using the pressing tool.

9. The method for manufacturing a display cover glass according to claim 8, wherein
the first forming die further includes a second forming surface continued to the first forming surface and curved to conform to an inside surface of the bent portion, and
the pressing is performed so that with each pressing using the pressing tool, a portion of the end portion of the flat glass sheet in contact with the second forming surface increases in area.

10. The method for manufacturing a display cover glass according to claim 8 or 9, wherein the forming step includes a plurality of pressing steps different from each other in direction of pressing of the end portion of the flat glass sheet with the pressing tool.

11. The method for manufacturing a display cover glass according to claim 10, wherein the forming step includes the plurality of pressing steps to be performed one followed by the other, the other pressing step of pressing the end portion of the flat glass sheet with the pressing tool so that an angle formed by the direction of pressing of the end portion of the flat glass sheet with the pressing tool and a normal of the first forming surface is greater than that in the one pressing step.

12. The method for manufacturing a display cover glass according to any one of claims 8 to 11, wherein at least at the first time of pressing with the pressing tool in the forming step, a tip end of the end portion of the flat glass sheet is pressed by the pressing tool.

13. The method for manufacturing a display cover glass according to any one of claims 1 to 12, wherein the forming step is performed in a state where a portion of the flat glass sheet corresponding to the bent portion of the cover glass is at a viscosity enabling plastic deformation and elastic deformation to occur therein when the end portion of the flat glass sheet is deformed.

14. The method for manufacturing a display cover glass according to any one of claims 1 to 13, wherein in the forming step a temperature of the first forming die is set so that a portion of the flat glass sheet in direct or indirect contact with the first forming die is made plastically non-deformable whereas a portion of the flat glass sheet out of contact with the first forming die is made plastically and elastically deformable.

15. A method for manufacturing a display cover glass including a flattened portion and a bent portion continued to the flattened portion, the method comprising:
the step of placing a flat glass sheet on a first forming die including a flat first forming surface so that a middle portion of the flat glass sheet is located on top of the first forming surface and an end portion of the flat glass sheet is located outside the first forming surface; and
a forming step of pressing the end portion of the flat glass sheet using a pressing tool with application of heat to at least the end portion of the flat glass sheet to deform the end portion of the flat glass sheet, thus forming a bent portion to obtain the cover glass,
wherein in the forming step a temperature of the first forming die is set so that a portion of the flat glass sheet in contact with the first forming die is made plastically non-deformable whereas a portion of the flat glass sheet out of contact with the first forming die is made plastically and elastically deformable.

16. The method for manufacturing a display cover glass according to claim 14 or 15, wherein in the forming step the temperature of the first forming die is set so that the portion of the flat glass sheet in contact with the first forming die has a lower temperature than a softening point of the flat glass sheet.

17. The method for manufacturing a display cover glass according to any one of claims 1 to 16, wherein the flat glass sheet used is a flat glass sheet having a coefficient of linear thermal expansion of 105×10⁻⁷/°C or less at 30°C to 380°C.

18. The method for manufacturing a display cover glass according to any one of claims 1 to 17, wherein
the forming step is performed with a second forming die disposed above the first forming die and the middle portion of the flat glass sheet clamped between the first and second forming dies, and
the second forming die is disposed so that an end portion of the first forming die extends beyond the second forming die in plan view.

19. The method for manufacturing a display cover glass according to claim 18, wherein
the first forming die further includes a second forming surface continued to the first forming surface and curved to conform to an inside surface of the bent portion, and
the second forming die is provided to avoid being disposed directly above the second forming surface.

20. An apparatus for manufacturing a display cover glass including a flattened portion and a bent portion continued to the flattened portion, the apparatus comprising:
a first forming die including a flat first forming surface and configured so that a flat glass sheet is placed thereon with a middle portion of the flat glass sheet located on top of the first forming surface and an end portion of the flat glass sheet located outside the first forming surface;
a heating mechanism configured to heat at least the end portion of the flat glass sheet;
a pressing tool configured to press the end portion of the flat glass sheet to deform the end portion of the flat glass sheet, thus forming a bent portion; and
a cushioning member disposed on at least the first forming surface of the first forming die and elastically deformable in a thickness direction.

21. The apparatus for manufacturing a display cover glass according to claim 20, further comprising a cushioning member disposed on a portion of the pressing tool to be in contact with the flat glass sheet, the cushioning member being elastically deformable in a thickness direction.

22. An apparatus for manufacturing a display cover glass including a flattened portion and a bent portion continued to the flattened portion, the apparatus comprising:
a first forming die including a flat first forming surface and configured so that a flat glass sheet is placed thereon with a middle portion of the flat glass sheet located on top of the first forming surface and an end portion of the flat glass sheet located outside the first forming surface;
a heating mechanism configured to heat at least the end portion of the flat glass sheet;
a pressing tool configured to press the end portion of the flat glass sheet to deform the end portion of the flat glass sheet, thus forming a bent portion; and
a cushioning member disposed on a portion of the pressing tool to be in contact with the flat glass sheet, the cushioning member being elastically deformable in a thickness direction.

23. The apparatus for manufacturing a display cover glass according to any one of claims 20 to 22, wherein the cushioning member is formed of at least one of woven fabric and non-woven fabric.

24. The apparatus for manufacturing a display cover glass according to any one of claims 20 to 23, wherein the pressing tool includes a through hole to which a coolant is supplied.

25. An apparatus for manufacturing a display cover glass including a flattened portion and a bent portion continued to the flattened portion, the apparatus comprising:
a first forming die including a flat first forming surface and configured so that a flat glass sheet is placed thereon with a middle portion of the flat glass sheet located on top of the first forming surface and an end portion of the flat glass sheet located outside the first forming surface;
a heating mechanism configured to heat at least the end portion of the flat glass sheet;
a pressing tool configured to press the end portion of the flat glass sheet to deform the end portion of the flat glass sheet, thus forming a bent portion; and
wherein the pressing tool includes a through hole to which a coolant is supplied.

26. The apparatus for manufacturing a display cover glass according to any one of claims 20 to 25, wherein the pressing tool is made of metal.

27. The apparatus for manufacturing a display cover glass according to any one of claims 20 to 26, further comprising:
a drive mechanism configured to drive the pressing tool,
wherein the drive mechanism allows the pressing tool to press the end portion of the flat glass sheet multiple times.

28. The apparatus for manufacturing a display cover glass according to claim 27, wherein
the first forming die further includes a second forming surface continued to the first forming surface and curved to conform to an inside surface of the bent portion, and
the drive mechanism is configured to drive the pressing tool so that with each pressing using the pressing tool, a portion of the end portion of the flat glass sheet in contact with the second forming surface increases in area.

29. The apparatus for manufacturing a display cover glass according to claim 27 or 28, wherein the drive mechanism is configured to drive the pressing tool so that a plurality of pressing steps different from each other in direction of pressing of the end portion of the flat glass sheet with the pressing tool are performed.

30. The apparatus for manufacturing a display cover glass according to claim 29, wherein the drive mechanism is configured to drive the pressing tool to provide the plurality of pressing steps one followed by the other, the other pressing step of pressing the end portion of the flat glass sheet with the pressing tool so that an angle formed by the direction of pressing of the end portion of the flat glass sheet with the pressing tool and a normal of the first forming surface is greater than that in the one pressing step.

31. The apparatus for manufacturing a display cover glass according to any one of claims 27 to 30, wherein the drive mechanism is configured to drive the pressing tool so that at the first time of pressing with the pressing tool, the pressing tool presses a tip end of the end portion of the flat glass sheet.

32. The apparatus for manufacturing a display cover glass according to any one of claims 20 to 31, wherein the drive mechanism allows, when a portion of the flat glass sheet corresponding to the bent portion of the cover glass has a viscosity enabling plastic deformation and elastic deformation to occur therein, the pressing tool to press the end portion of the flat glass sheet.

33. The apparatus for manufacturing a display cover glass according to any one of claims 20 to 32, wherein the first forming die includes a through hole to which a coolant is supplied.

34. An apparatus for manufacturing a display cover glass including a flattened portion and a bent portion continued to the flattened portion, the apparatus comprising:
a first forming die including a flat first forming surface and configured so that a flat glass sheet is placed thereon with a middle portion of the flat glass sheet located on top of the first forming surface and an end portion of the flat glass sheet located outside the first forming surface;
a heating mechanism configured to heat at least the end portion of the flat glass sheet;
a pressing tool configured to press the end portion of the flat glass sheet to deform the end portion of the flat glass sheet, thus forming a bent portion; and
wherein the first forming die includes a through hole to which a coolant is supplied.

35. The apparatus for manufacturing a display cover glass according to any one of claims 20 to 34, further comprising:
a second forming die disposed above the first forming die and configured to clamp the middle portion of the flat glass sheet together with the first forming die,
wherein an end portion of the first forming die extends beyond the second forming die in plan view.

36. The apparatus for manufacturing a display cover glass according to claim 35, wherein
the first forming die further includes a second forming surface continued to the first forming surface and curved to conform to an inside surface of the bent portion, and
the second forming die is provided to avoid being located directly above the second forming surface.
